# EUROPEAN PATENT SPECIFICATION

(11) **EP 4 282 170 B1**
(45) Date of publication and mention of the grant of the patent: **22.04.2026**
(21) Application number: 21720378.5
(22) Date of filing: 25.03.2021
(51) Int. Cl.: H04L 65/1069, H04L 65/401, H04W 4/80

(54) **SPLIT CONNECTED ISOCHRONOUS GROUP**
GETEILTE, VERBUNDENE ISOCHRONE GRUPPE
GROUPE ISOCHRONE CONNECTÉ DIVISÉ

(30) Priority: 19.01.2021 IN 202141002412
(43) Date of publication of application: 29.11.2023
(73) Proprietor: QUALCOMM INCORPORATED, San Diego, California 92121-1714 (US)
(72) Inventor: CAMPBELL, Benjamin, San Diego, California 92121 (US); BATRA, Mayank, San Diego, California 92121 (US); OAKES, Ivan, San Diego, California 92121 (US); WOJCIESZAK, Laurent, San Diego, California 92121 (US); SRIVASTAVA, Dishant, San Diego, California 92121 (US); KIDIYOOR, Nitin Raghavendra, San Diego, California 92121 (US); AGARWAL, Vishal, San Diego, California 92121 (US); LINSKY, Joel, San Diego, California 92121 (US); KOGAN, Douglas, San Diego, California 92121 (US)
(74) Representative: Bardehle Pagenberg Partnerschaft mbB Patentanwälte Rechtsanwälte
(86) International application number: PCT/US2021/070311
(87) International publication number: WO 2022/159248

(56) References cited:
- US-A1- 2019 174 557
- US-A1- 2019 327 778
- US-A1- 2020 252 993

## Description

### FIELD OF THE DISCLOSURE

Aspects of the present disclosure generally relate to wireless communication and to techniques and apparatuses for using a split connected isochronous group.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP). Multi-access technologies may also include New Radio (NR) 5G or 6G.

A wireless network may include a number of base stations (BSs) that can support communication for a number of user equipment (UEs). A UE may communicate with a BS via the downlink and uplink. "Downlink" or "forward link" refers to the communication link from the BS to the UE, and "uplink" or "reverse link" refers to the communication link from the UE to the BS. As will be described in more detail herein, a BS may be referred to as a Node B, a gNB, an access point (AP), a radio head, a transmit receive point (TRP), a New Radio (NR) BS, or a 5G Node B.

The UE may operate with peripheral devices (e.g., earbuds, smart watches) using short range wireless communication. Short range wireless communication enables wireless communication over relatively short distances (e.g., within 30 meters). Bluetooth^{®} protocols are an example of a wireless technology standard for exchanging data over short distances using short-wavelength ultra high frequency (UHF) radio waves from 2.4 gigahertz (GHz) to 2.485 GHz. Bluetooth^{®} Low Energy (BLE) protocol is for communication with devices running on low power.

US 2019/327778 A1 discloses systems, methods and apparatus, including computer programs encoded on computer storage media for reliable communication between a source device, and two or more sink devices. US 2019/174557 A1 discloses a first audio device that exchanges first control signals with a source device and thereby receives first audio signals from the source device and a second audio device that exchanges second control signals with the first audio device including information the second audio device needs to receive the first audio signals from the source device. US 2020/252993 A1 provides systems, methods and apparatus, including computer programs encoded on computer storage media, for fast role switching between master and slave roles among wireless nodes.

### SUMMARY

The invention is defined in the appended claims.

In some aspects, a method of wireless communication performed by a first peripheral device includes establishing, with a user equipment (UE), a first connected isochronous stream (CIS), a second CIS, and a control channel for the first CIS and the second CIS, where the first peripheral device is configured to output audio signals for the first CIS and handle feedback for the first CIS. The method includes transmitting, to a second peripheral device paired with the first peripheral device, an indication that the second peripheral device is to output audio signals for the second CIS and handle feedback for the second CIS, and receiving the first CIS, while maintaining the control channel for the first CIS and the second CIS.

In some aspects, a method of wireless communication performed by a first peripheral device includes receiving, from a second peripheral device paired to the first peripheral device, an indication that the first peripheral device is to output audio for a first CIS from a UE and handle feedback for the first CIS, receiving the first CIS, and outputting audio signals for the first CIS.

In some aspects, a method of wireless communication performed by a first peripheral device includes establishing, with a UE, a control channel for a first audio stream and a second audio stream from the UE, where the first peripheral device is configured to output audio signals for the first audio stream and handle feedback for the first audio stream. The method includes transmitting, to a second peripheral device paired with the first peripheral device, an indication that the second peripheral device is to output audio signals for the second audio stream and handle feedback for audio packets designated for the second audio stream, receiving audio packets designated for the first audio stream, and transmitting feedback for non-audio packets and for one or more of the audio packets designated for the first audio stream.

In some aspects, a method of wireless communication performed by a first peripheral device includes receiving, from a second peripheral device paired to the first peripheral device, an indication that the first peripheral device is to output audio signals for a first audio stream and handle feedback for audio packets designated for the first audio stream, receiving the first audio stream, and transmitting feedback for audio packets designated for the first audio stream.

In some aspects, a first peripheral device for wireless communication includes a memory and one or more processors coupled to the memory, the memory and the one or more processors configured to establish, with a UE, a first CIS, a second CIS, and a control channel for the first CIS and the second CIS, where the first peripheral device is configured to output audio signals for the first CIS and handle feedback for the first CIS, transmit, to a second peripheral device paired with the first peripheral device, an indication that the second peripheral device is to output audio signals for the second CIS and handle feedback for the second CIS, and receive the first CIS, while maintaining the control channel for the first CIS and the second CIS.

In some aspects, a first peripheral device for wireless communication includes a memory and one or more processors coupled to the memory, the memory and the one or more processors configured to receive, from a second peripheral device paired to the first peripheral device, an indication that the first peripheral device is to output audio for a first CIS from a UE and handle feedback for the first CIS, receive the first CIS, and output audio signals for the first CIS.

In some aspects, a first peripheral device for wireless communication includes a memory and one or more processors coupled to the memory, the memory and the one or more processors configured to establish, with a UE, a control channel for a first audio stream and a second audio stream from the UE, where the first peripheral device is configured to output audio signals for the first audio stream and handle feedback for the first audio stream, transmit, to a second peripheral device paired with the first peripheral device, an indication that the second peripheral device is to output audio signals for the second audio stream and handle feedback for audio packets designated for the second audio stream, receive audio packets designated for the first audio stream, and transmit feedback for non-audio packets and for one or more of the audio packets designated for the first audio stream.

In some aspects, a first peripheral device for wireless communication includes a memory and one or more processors coupled to the memory, the memory and the one or more processors configured to receive, from a second peripheral device paired to the first peripheral device, an indication that the first peripheral device is to output audio signals for a first audio stream and handle feedback for audio packets designated for the first audio stream, receive the first audio stream, and transmit feedback for audio packets designated for the first audio stream.

In some aspects, a non-transitory computer-readable medium storing a set of instructions for wireless communication includes one or more instructions that, when executed by one or more processors of a first peripheral device, cause the first peripheral device to establish, with a UE, a first CIS, a second CIS, and a control channel for the first CIS and the second CIS, where the first peripheral device is configured to output audio signals for the first CIS and handle feedback for the first CIS, transmit, to a second peripheral device paired with the first peripheral device, an indication that the second peripheral device is to output audio signals for the second CIS and handle feedback for the second CIS, and receive the first CIS, while maintaining the control channel for the first CIS and the second CIS.

In some aspects, a non-transitory computer-readable medium storing a set of instructions for wireless communication includes one or more instructions that, when executed by one or more processors of a first peripheral device, cause the first peripheral device to receive, from a second peripheral device paired to the first peripheral device, an indication that the first peripheral device is to output audio for a first CIS from a UE and handle feedback for the first CIS, receive the first CIS, and output audio signals for the first CIS.

In some aspects, a non-transitory computer-readable medium storing a set of instructions for wireless communication includes one or more instructions that, when executed by one or more processors of a first peripheral device, cause the first peripheral device to establish, with a UE, a control channel for a first audio stream and a second audio stream from the UE, where the first peripheral device is configured to output audio signals for the first audio stream and handle feedback for the first audio stream; transmit, to a second peripheral device paired with the first peripheral device, an indication that the second peripheral device is to output audio signals for the second audio stream and handle feedback for audio packets designated for the second audio stream, receive audio packets designated for the first audio stream, and transmit feedback for non-audio packets and for one or more of the audio packets designated for the first audio stream.

In some aspects, a non-transitory computer-readable medium storing a set of instructions for wireless communication includes one or more instructions that, when executed by one or more processors of a first peripheral device, cause the first peripheral device to receive, from a second peripheral device paired to the first peripheral device, an indication that the first peripheral device is to output audio signals for a first audio stream and handle feedback for audio packets designated for the first audio stream, receive the first audio stream, and transmit feedback for audio packets designated for the first audio stream.

In some aspects, an apparatus for wireless communication includes means for establishing, with a UE, a first CIS, a second CIS, and a control channel for the first CIS and the second CIS, where the apparatus is configured to output audio signals for the first CIS and handle feedback for the first CIS, means for transmitting, to a peripheral device paired with the apparatus, an indication that the peripheral device is to output audio signals for the second CIS and handle feedback for the second CIS, and means for receiving the first CIS, while maintaining the control channel for the first CIS and the second CIS.

In some aspects, an apparatus for wireless communication includes means for receiving, from a peripheral device paired to the apparatus, an indication that the apparatus is to output audio for a first CIS from a UE and handle feedback for the first CIS; means for receiving the first CIS, and means for outputting audio signals for the first CIS.

In some aspects, an apparatus for wireless communication includes means for establishing, with a UE, a control channel for a first audio stream and a second audio stream from the UE, where the apparatus is configured to output audio signals for the first audio stream and handle feedback for the first audio stream, means for transmitting, to a peripheral device paired with the apparatus, an indication that the peripheral device is to output audio signals for the second audio stream and handle feedback for audio packets designated for the second audio stream, means for receiving audio packets designated for the first audio stream, and means for transmitting feedback for non-audio packets and for one or more of the audio packets designated for the first audio stream.

In some aspects, an apparatus for wireless communication includes means for receiving, from a peripheral device paired to the apparatus, an indication that the apparatus is to output audio signals for a first audio stream and handle feedback for audio packets designated for the first audio stream, means for receiving the first audio stream, and means for transmitting feedback for audio packets designated for the first audio stream.

Aspects generally include a method, apparatus, system, computer program product, non-transitory computer-readable medium, user equipment, peripheral device, base station, wireless communication device, and/or processing system as substantially described herein with reference to and as illustrated by the drawings and specification.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of peripheral devices, in accordance with the present disclosure.
Fig. 2 is a diagram illustrating an example of components of a peripheral device, in accordance with the present disclosure.
Fig. 3 is a diagram illustrating an example of true wireless stereo, in accordance with the present disclosure.
Fig. 4 is a diagram illustrating an example of low energy audio, in accordance with the present disclosure.
Fig. 5 is a diagram illustrating an example of paired earbuds for a user equipment (UE), in accordance with the present disclosure.
Fig. 6 is a diagram illustrating an example of acknowledgement for separate packets, in accordance with the present disclosure.
Fig. 7 is a diagram illustrating an example process performed, for example, by a first peripheral device, in accordance with the present disclosure.
Fig. 8 is a diagram illustrating an example process performed, for example, by a first peripheral device, in accordance with the present disclosure.
Fig. 9 is a diagram illustrating an example process performed, for example, by a first peripheral device, in accordance with the present disclosure.
Fig. 10 is a diagram illustrating an example process performed, for example, by a first peripheral device, in accordance with the present disclosure.
Figs. 11-14 are block diagrams of example apparatuses for wireless communication, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein, one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of wireless systems will now be presented with reference to various apparatuses and techniques. These apparatuses and techniques will be described in the following detailed description and illustrated in the accompanying drawings by various blocks, modules, components, circuits, steps, processes, algorithms, and/or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described herein using terminology commonly associated with short range wireless protocols, Long Term Evolution (LTE), or a 5G or New Radio (NR) radio access technology (RAT), aspects of the present disclosure can be applied to other wireless protocols or RATs.

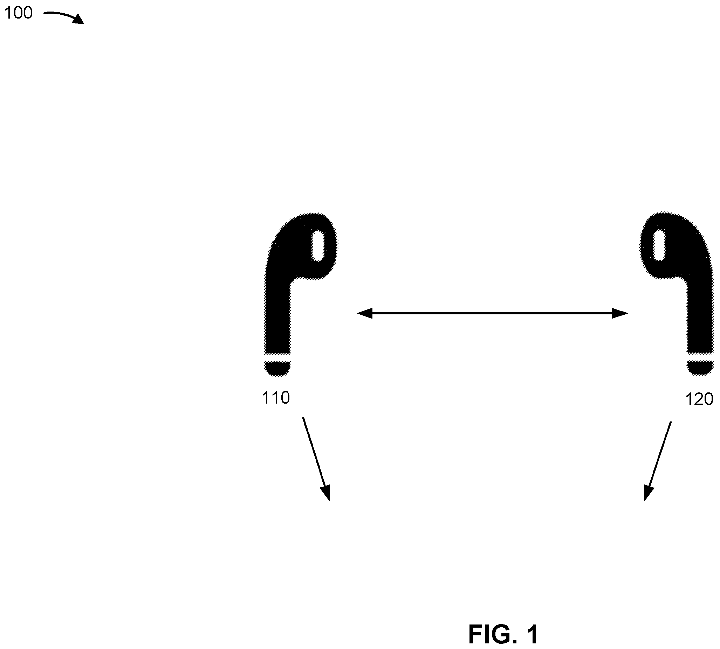

Fig. 1 is a diagram illustrating an example of peripheral devices, in accordance with the present disclosure. A peripheral device may connect to and operate with a user equipment (UE). A peripheral device may include a medical device or equipment, biometric sensors/devices, wearable devices or peripheral devices (earbuds, smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system device, or any other suitable device that is configured to communicate via a wireless or wired medium. Example 100 shows a pair of peripheral devices 110 and 120 (e.g., earbuds) that may be paired to each other. Peripheral device 110 and peripheral device 120 may communicate using the electromagnetic spectrum, which may be subdivided based on frequency or wavelength into various classes, bands, or channels. Peripheral device 110 and/or peripheral device 120 may use wireless protocols to pair to each other and/or to pair to a UE.

Some peripheral devices may work with or may be considered machine-type communication (MTC) devices or evolved or enhanced machine-type communication (eMTC) devices. Some peripheral devices may work with or may be considered Internet-of-Things (IoT) devices or narrowband IoT (NB-IoT) devices. A peripheral device may include or be included inside a housing that houses multiple components, such as processor components and/or memory components. In some aspects, the processor components and the memory components may be coupled together. For example, the processor components (e.g., one or more processors) and the memory components (e.g., a memory) may be operatively coupled, communicatively coupled, electronically coupled, and/or electrically coupled.

As indicated above, Fig. 1 is provided as an example. Other examples may differ from what is described with regard to Fig. 1.

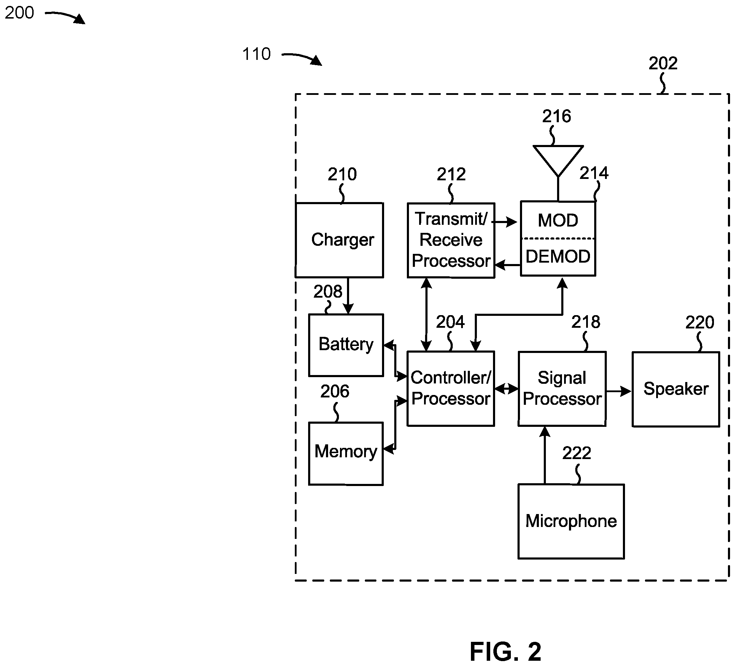

Fig. 2 is a diagram illustrating an example 200 of components of a peripheral device, such as an earbud, in accordance with the present disclosure. Peripheral device 110 may include a housing 202 shaped to fit in or on an ear and configured to contain multiple components. Housing 202 may include a control/processor 204, which may include one or more controllers, one or more processors, or a combination thereof, that executes program code or instructions stored in a memory 206. Housing 202 may include a battery 208 that is a power source connected to charger 210. Charger 210 may receive power via a cord or by induction and charge battery 208. Housing 202 may include a transmit/receive processor 212 that uses a modulator/demodulator 214 to process input streams received with one or more antennas 216 or to process output streams transmitted with the one or more antennas 216. The one or more antennas 216 may include, or may be included within, one or more antenna panels, antenna groups, sets of antenna elements, and/or antenna arrays, among other examples. Transmit/receive processor 212 may be configured to determine a reference signal received power (RSRP) parameter, a received signal strength indicator (RSSI) parameter, a reference signal received quality (RSRQ) parameter, and/or a channel quality indicator (CQI) parameter of wireless signals.

Housing 202 may include a signal processor 218 for processing audio signals output by speaker 220 and for processing audio signals received by microphone 222. Signal processor 218 may include filters, amplifiers, digital-to-analog converters, analog-to-digital converter, and/or other components for processing audio signals.

The components shown in Fig. 2, and other sensors or components not shown, may be controlled by controller/processor 204 and memory 206 to perform aspects of any of the methods described herein with reference to Figs. 1-14. For example, a pair of earbuds may each include the components shown in Fig. 2. The earbuds may each connect to a UE and use a connected isochronous stream (CIS) to provide audio output. A CIS may be a point-to-point, data transportation stream between the UE and a peripheral device (e.g., earbud). According to some aspects of the present disclosure, one earbud may maintain a control channel to the UE for both earbuds.

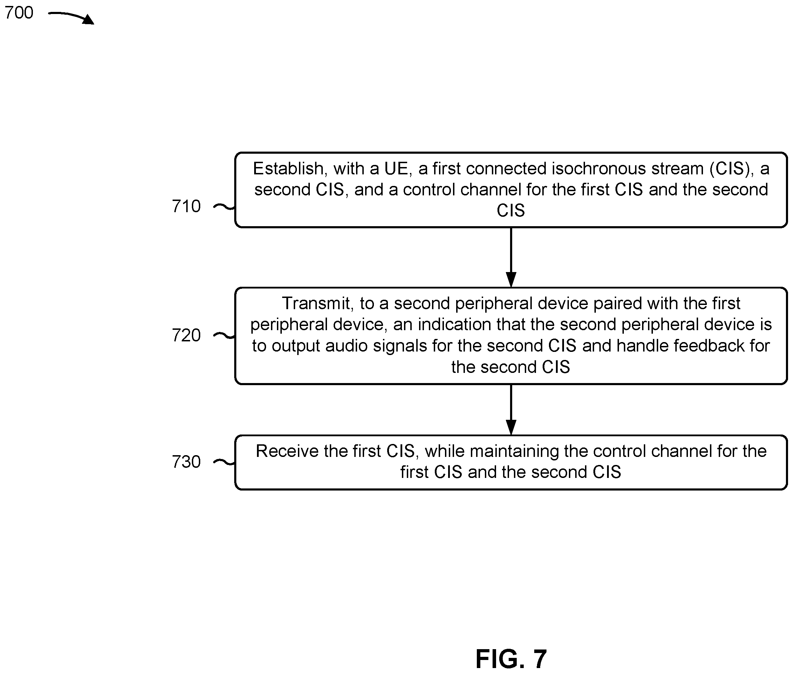

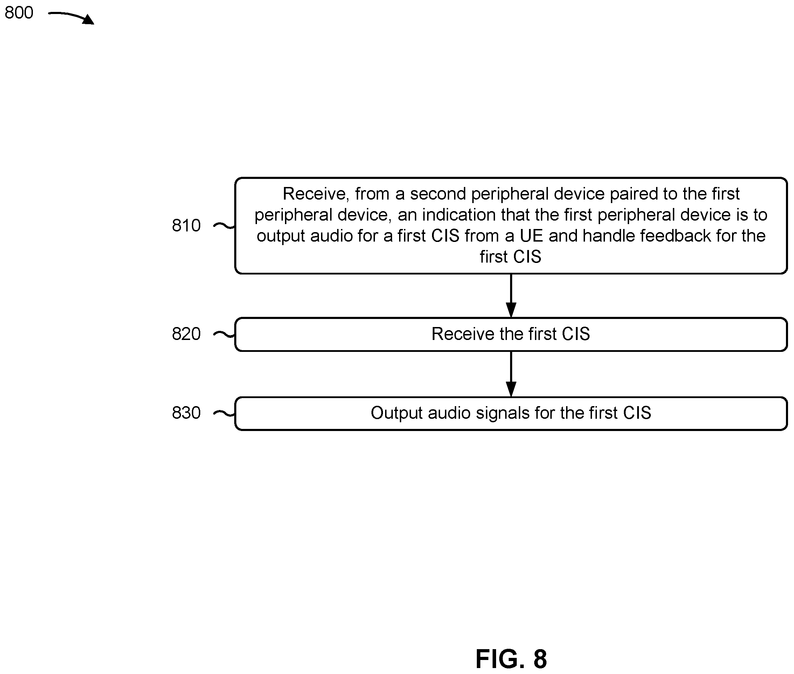

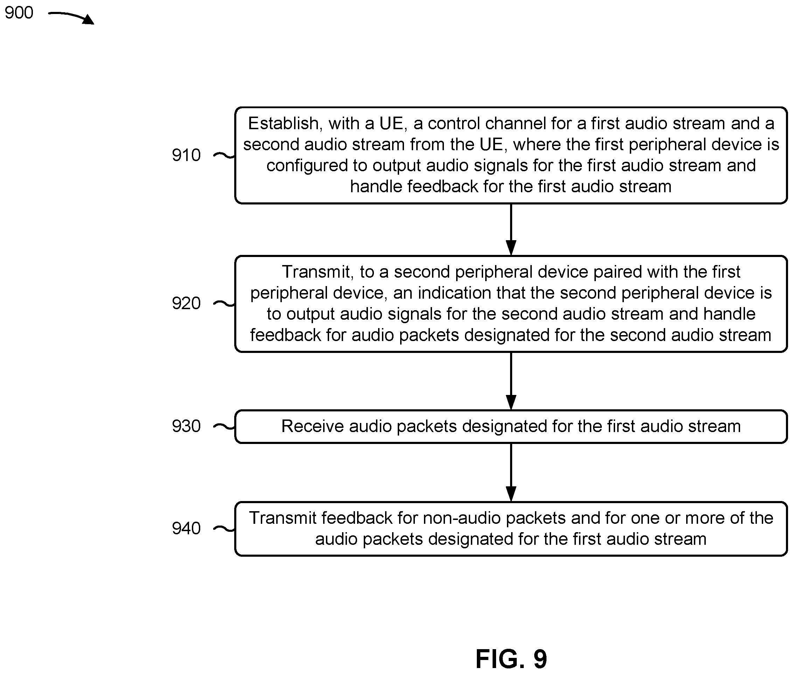

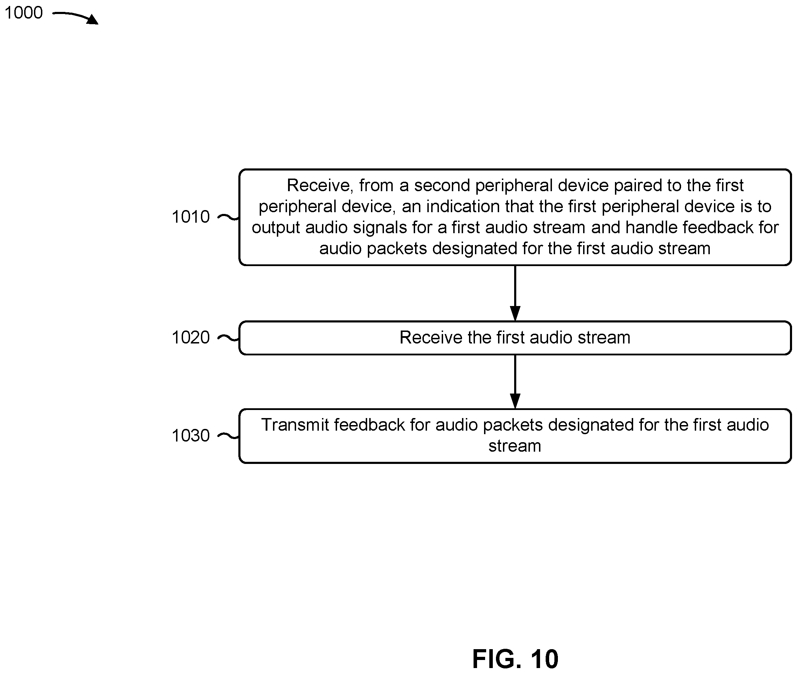

Controller/processor 204 of peripheral device 110, a controller/processor of a UE, and/or any other component(s) of Fig. 2 may perform one or more techniques associated with using a split CIS group (CIG), as described in more detail elsewhere herein. In some aspects, a peripheral device described herein is the peripheral device 110, is included in peripheral device 110, or includes one or more components of peripheral device 110 shown in Fig. 2. For example, controller/processor 204 and/or any other component(s) of Fig. 2 may perform or direct operations of, for example, process 700 of Fig. 7, process 800 of Fig. 8, process 900 of Fig. 9, process 1000 of Fig. 10, and/or other processes as described herein. Memory 206 may store data and program codes for the peripheral device, respectively. In some aspects, memory 206 may include a non-transitory computer-readable medium storing one or more instructions (e.g., code and/or program code) for wireless communication. For example, the one or more instructions, when executed (e.g., directly, or after compiling, converting, and/or interpreting) by one or more processors of peripheral device 110, may cause the one or more processors, peripheral device 110, and/or another device to perform or direct operations of, for example, process 700 of Fig. 7, process 800 of Fig. 8, process 900 of Fig. 9, process 1000 of Fig. 10, and/or other processes as described herein. In some aspects, executing instructions may include running the instructions, converting the instructions, compiling the instructions, and/or interpreting the instructions, among other examples.

While blocks in Fig. 2 are illustrated as distinct components, the functions described above with respect to the blocks may be implemented in a single hardware, software, or combination component or in various combinations of components. For example, the functions described with respect to the transmit/receive processor 212 or signal processor 218 may be performed by or under the control of controller/processor 204. The peripheral device may also include other components to perform functions, including earbud functions.

In some aspects, the first peripheral device includes means for establishing, with a UE, a first CIS, a second CIS, and a control channel for the first CIS and the second CIS, where the first peripheral device is configured to output audio signals for the first CIS and handle feedback for the first CIS, means for transmitting, to a second peripheral device paired with the first peripheral device, an indication that the second peripheral device is to output audio signals for the second CIS and handle feedback for the second CIS, and/or means for receiving the first CIS, while maintaining the control channel for the first CIS and the second CIS. In some aspects, the means for the first peripheral device to perform operations described herein may include, for example, one or more of controller/processor 204, memory 206, transmit/receive processor 212, modulator/demodulator 214, one or more antennas 216, signal processor 218, speaker 220, and/or microphone 222.

In some aspects, the first peripheral device includes means for causing the first peripheral device to output audio signals for the first CIS. In some aspects, the first peripheral device includes means for transmitting microphone data on the first CIS.

In some aspects, the first peripheral device includes means for swapping an address of the first peripheral device and an address of the second peripheral device. In some aspects, the first peripheral device includes means for transmitting, to the second peripheral device, an indication that the control channel is to be handed over to the second peripheral device, and/or means for handing over the control channel to the second peripheral device.

In some aspects, the first peripheral device includes means for receiving, from the UE, the second CIS after detecting that the second peripheral device is not receiving the second CIS, means for outputting audio signals for the first CIS and the second CIS, and/or means for handling feedback for the second CIS. In some aspects, the first peripheral device includes means for transmitting microphone data on the second CIS.

In some aspects, the first peripheral device includes means for receiving, from the second peripheral device after stopping maintenance of the control channel and the first CIS, an indication to receive the first CIS and handle feedback for the first CIS.

In some aspects, the first peripheral device includes means for adjusting a transmit power for transmitting feedback or microphone data to the UE based at least in part on a result of comparing a signal strength of the first CIS and a signal strength of the second CIS, where the transmit power is adjusted such that the UE is to detect a same transmit power from the first peripheral device and the second peripheral device.

In some aspects, the first peripheral device includes means for adjusting a transmit power for transmitting feedback or microphone data to the UE based at least in part on receiving an indication from the UE to adjust the transmit power. In some aspects, the first peripheral device includes means for transmitting, to the UE, an indication of channel qualities for frequencies that are available for one or more of the control channel or the first CIS. In some aspects, the first peripheral device includes means for receiving, from the second peripheral device, information about channel qualities of frequencies that are available for the second CIS, where the information is included in the indication that is transmitted to the UE.

In some aspects, the first peripheral device includes means for synchronizing a timing reference for slot boundaries used by the first peripheral device and the second peripheral device. In some aspects, the first peripheral device includes means for adjusting a timing of a link between the first peripheral device and the second peripheral device to avoid time domain resource conflicts with the first CIS and the second CIS.

In some aspects, the first peripheral device includes means for receiving, from a second peripheral device paired to the first peripheral device, an indication that the first peripheral device is to output audio for a first CIS from a UE and handle feedback for the first CIS, means for receiving the first CIS, and/or means for outputting audio signals for the first CIS. In some aspects, the means for the first peripheral device to perform operations described herein may include, for example, one or more of controller/processor 204, memory 206, transmit/receive processor 212, modulator/demodulator 214, one or more antennas 216, signal processor 218, speaker 220, and/or microphone 222.

In some aspects, the first peripheral device includes means for handling feedback for the first CIS. In some aspects, the first peripheral device includes means for transmitting microphone data on the first CIS.

In some aspects, the first peripheral device includes means for receiving, from the second peripheral device, an indication that a control channel for the first CIS and the second CIS is to be handed over to the first peripheral device, and/or means for maintaining the control channel for the first CIS and the second CIS. In some aspects, the first peripheral device includes means for swapping an address of the first peripheral device and an address of the second peripheral device.

In some aspects, the first peripheral device includes means for establishing, with the UE, a control channel for the first CIS and the second CIS after the second peripheral device has stopped maintenance of the control channel and the second CIS from the UE, and/or means for transmitting, to the second peripheral device, an indication that the second peripheral device is to output audio signals for the second CIS and handle feedback for the second CIS, after the second peripheral device is ready to receive the second CIS.

In some aspects, the first peripheral device includes means for transmitting, to the second peripheral device, an indication of channel qualities of frequencies that are available for the first CIS.

In some aspects, the first peripheral device includes means for establishing, with a UE, a control channel for a first audio stream and a second audio stream from the UE, where the first peripheral device is configured to output audio signals for the first audio stream and handle feedback for the first audio stream, means for transmitting, to a second peripheral device paired with the first peripheral device, an indication that the second peripheral device is to output audio signals for the second audio stream and handle feedback for audio packets designated for the second audio stream, means for receiving audio packets designated for the first audio stream, and/or means for transmitting feedback for non-audio packets and for one or more of the audio packets designated for the first audio stream. In some aspects, the means for the first peripheral device to perform operations described herein may include, for example, one or more of controller/processor 204, memory 206, transmit/receive processor 212, modulator/demodulator 214, one or more antennas 216, signal processor 218, speaker 220, and/or microphone 222.

In some aspects, the first peripheral device includes means for receiving, from a second peripheral device paired to the first peripheral device, an indication that the first peripheral device is to output audio signals for a first audio stream and handle feedback for audio packets designated for the first audio stream, means for receiving the first audio stream, and/or means for transmitting feedback for audio packets designated for the first audio stream. In some aspects, the means for the first peripheral device to perform operations described herein may include, for example, one or more of controller/processor 204, memory 206, transmit/receive processor 212, modulator/demodulator 214, one or more antennas 216, signal processor 218, speaker 220, and/or microphone 222.

As indicated above, Fig. 2 is provided as an example. Other examples may differ from what is described with regard to Fig. 2.

A UE may use peripheral devices, such as a smartwatch, earbuds or other hearables, to provide additional services to a user of the UE. For example, a pair of earbuds connected to the UE may provide voice or music to the user via audio signals. The earbuds may be wireless and operate according to CIG features as specified by a device specification, such as a Bluetooth^{®} core specification. A UE may create a CIG that includes include one or more CISs. A CIS may be a point-to-point, data transportation stream between the UE and a peripheral device (e.g., earbud). The CIS may use a bidirectional communication protocol with feedback (e.g., acknowledgement). The UE may operate with the earbuds using concepts such as a true wireless stereo (TWS) concept or a Bluetooth^{®} low energy (LE) Audio (LEA) concept.

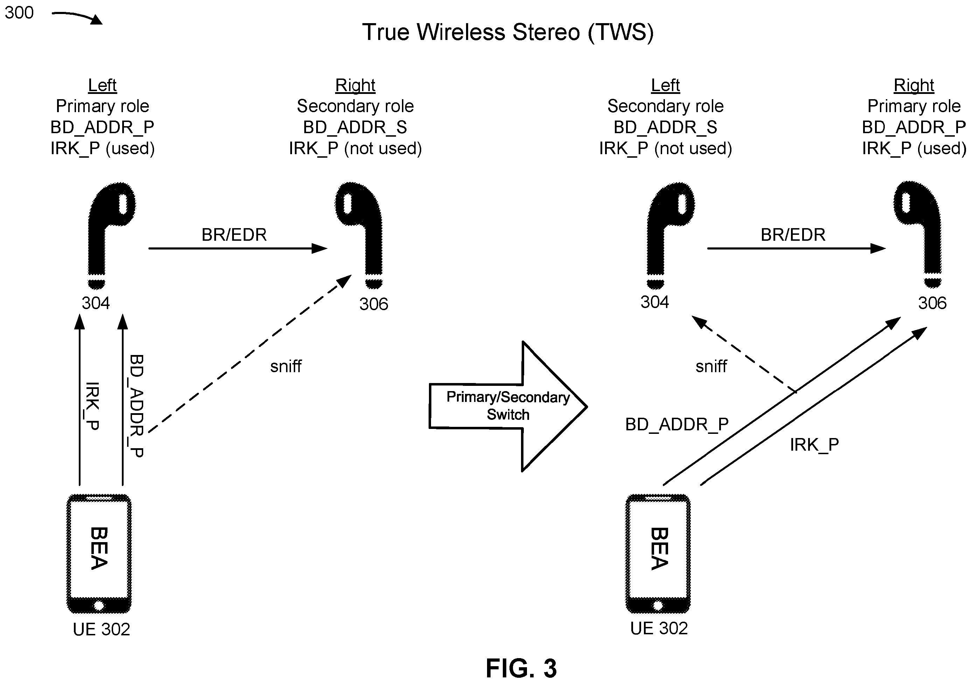

Fig. 3 is a diagram illustrating an example 300 of TWS, in accordance with the present disclosure. Example 300 shows a UE 302 that operates with a first earbud 304 (e.g., peripheral device 110) and a second earbud 306 (e.g., peripheral device 110) that are paired together. UE 302 is labeled "BEA" to indicate that UE 302 supports a basic rate (BR)/enhanced data rate (EDR) Bluetooth^{®} Audio link but not LEA.

When UE 302 operates in a TWS mode with the pair of earbuds 304 and 306, earbud 304 takes on a primary role and earbud 306 takes on a secondary role. Note that either earbud may take on the primary role or the secondary role. Earbud 304, as a primary earbud in the primary role, may connect to UE 302 over a BR/EDR link. Earbud 304 may connect to earbud 306 over a BR/EDR link and/or a Bluetooth^{®} LE link. Earbud 306, as a secondary earbud in the secondary role, may sniff the link between UE 302 and earbud 304 to receive packets that use an audio video distribution transport protocol (AVDTP) or an extended synchronous connection (eSCO) protocol. Earbud 304 and earbud 306 may use a relay piconet between them to selectively relay missing packets. Earbud 306, in the secondary role, may not connect to UE 302 on a BR/EDR link or an LE link. In some designs, earbud 304 may relay, to earbud 306, all of the audio data packets or all of the audio data packets that pertain to earbud 306 (e.g., right audio or left audio).

Earbud 304 and earbud 306 may use identity and security protocols for pairing and operations. These may include Bluetooth^{®} protocols. A Bluetooth^{®} device (BD) address (BD_ADDR) is a unique 48-bit identifier assigned to each Bluetooth^{®} device by the manufacturer. Earbud 304 may have a primary BD address (BD_ADDR_P) and earbud 306 may have a secondary BD address (BD_ADDR_S). Earbud 304 may expose the BD_ADDR_P to UE 302 during connection setup. An identity resolving key (IRK) is a cryptographic key used for identifying a device that is using resolvable private (random) addresses over Bluetooth^{®} LE. Earbud 304 may use an IRK associated with the primary BD address (IRK_P) to connect to UE 302. In some scenarios, such as a primary/secondary role switch, earbud 304 and earbud 306 may swap primary and secondary roles. This may include swapping BD_ADDR_P and BD_ADDR_S between earbud 304 and earbud 306.

As indicated above, Fig. 3 is provided as an example. Other examples may differ from what is described with regard to Fig. 3.

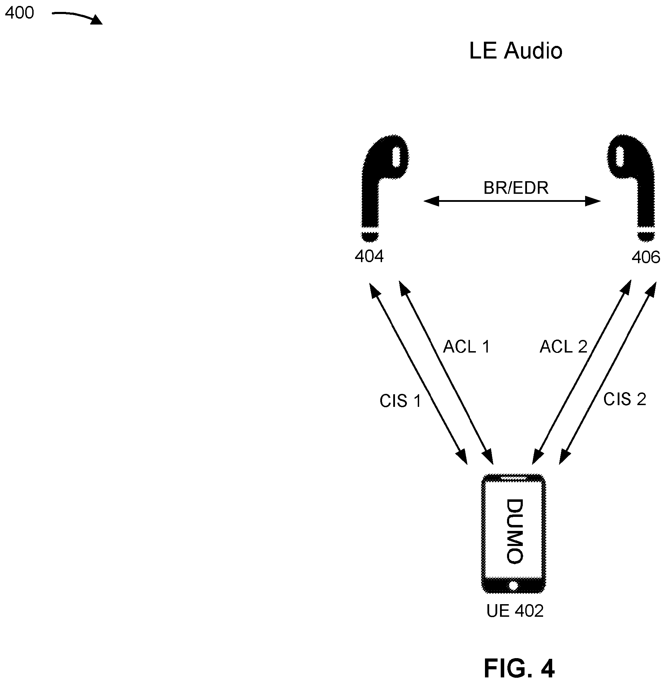

Fig. 4 is a diagram illustrating an example 400 of LEA, in accordance with the present disclosure. Example 400 shows a UE 402 that operates with a first earbud 404 (e.g., peripheral device 110) and a second earbud 406 (e.g., peripheral device 110) that are paired together.

When the pair of earbuds 404 and 406 operate in an LEA mode, each earbud connects to UE 402 with a CIS and an LE asynchronous connection-less (ACL) channel. The ACL channel is used as a control channel for transmitting and receiving control information and other non-audio data. Example 400 shows CIS 1 and ACL 1 between UE 402 and earbud 404, and CIS 2 and ACL 2 between UE 402 and earbud 406. In LEA, there is no primary role or secondary role for earbud 404 and earbud 406. If one earbud loses a connection, the other earbud continues on as normal. In Fig. 4, UE 402 is labeled "DUMO" (dual mode) to indicate that UE 402 supports LEA and BEA.

TWS may be used for high quality media audio, and LEA may be used for voice and low latency (e.g., gaming) applications. Therefore, both TWS (BR/EDR) and LEA may be used for earbud connections with a DUMO UE. However, TWS and LEA are incompatible with each other. Earbuds may not successfully operate in a TWS mode with LEA. The earbuds may suffer incompatibility issues. For example, when a primary earbud is disconnected from a UE (e.g., placed in a case), according to TWS design, a new primary earbud will use BD_ADDR_P and IRK_P. However, according to LEA design, the new primary earbud will continue to use BD_ADDR_S and an IRK associated with the secondary BD address (IRK_S). If two UEs (BEA UE and DUMO UE) are involved, the new primary earbud may use BD_ADDR_P and IRK_P to connect with the BEA UE and use BD_ADDR_S and IRK_S to connect with the DUMO UE. As a result, the DUMO UE may think that the disconnected earbud has reappeared, thereby creating two LEA connections with the same earbud. Furthermore, the BEA UE may not find and connect to a secondary earbud. If the earbuds are not able to work between a BEA UE and a DUMO UE, the user experience will be poor.

As indicated above, Fig. 4 is provided as an example. Other examples may differ from what is described with regard to Fig. 4.

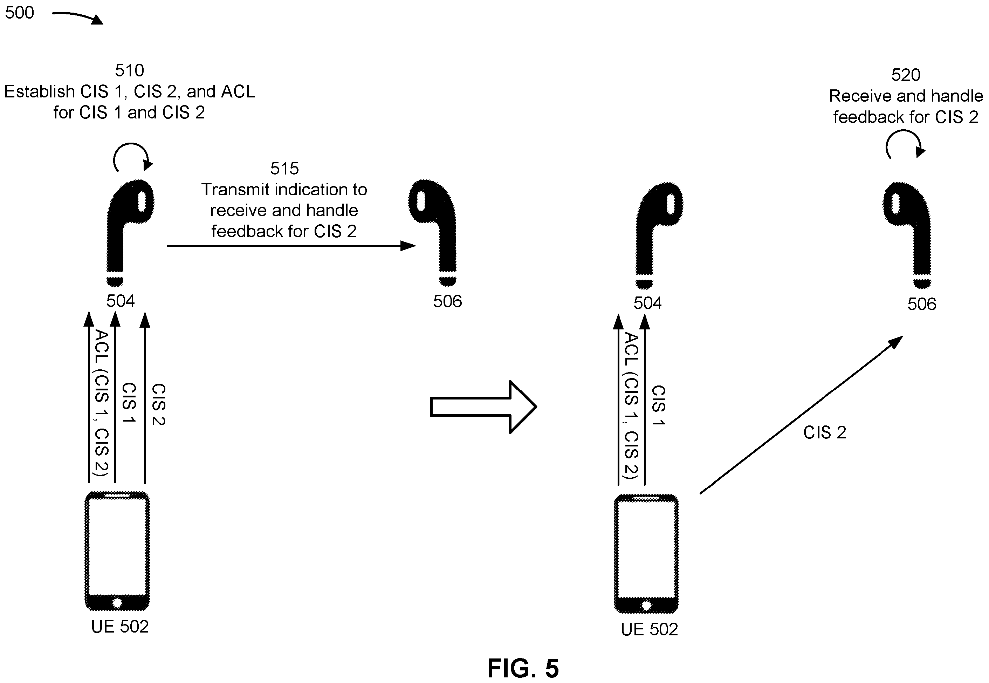

Fig. 5 is a diagram illustrating an example 500 of paired earbuds for a UE, in accordance with the present disclosure. Example 500 shows a UE 502 that operates with a first earbud 504 (e.g., peripheral device 110) and a second earbud 506 (e.g., peripheral device 110) that are paired together.

According to various aspects described herein, peripheral devices, such as earbuds or other hearables, may be designed to operate in a TWS mode with LEA. One of the earbuds may establish, as a primary earbud with a UE, ownership of a control channel and both CISs. The primary earbud may then delegate a CIS to a secondary earbud while maintaining ownership of the control channel. That is, the primary earbud may appear as a single stereo device to the UE, with an ACL channel and two CISs, but perform a TWS operation with the secondary earbud. In this way, the earbuds may operate such that TWS and LEA aspects are compatible. As a result, the earbuds may work properly with the UE, whether the UE is a BEA UE or a DUMO UE.

As shown by reference number 510, earbud 504, paired with another earbud 506, may establish ownership of a control channel and two CISs (left audio and right audio). For example, earbud 504 may establish a first CIS (shown as CIS 1), a second CIS (shown as CIS 2), and a control channel (shown as ACL) with UE 502. As shown by reference number 515, earbud 504 may transmit an indication that earbud 506 is to receive CIS 2. As shown by reference number 520, earbud 506 may receive CIS 2 and take ownership of CIS 2, which may include providing feedback for CIS 2 (including retransmissions) and transmitting microphone data (e.g., encoded voice packets) on CIS 2. An IRK_P may be associated with CIS 2. Earbud 504 and earbud 506 may otherwise relay packets, synchronize slot timing, and/or perform other coordination as paired earbuds.

In some aspects, earbud 504 may have a primary role and earbud 506 may have a secondary role. The primary and secondary roles may be part of TWS, but as explained above, these roles are not part of LEA. Earbud 504 and earbud 506 may use these roles of TWS while using an ACL channel and a CIS that are part of LEA. As part of having primary and secondary roles, earbud 504 may have a primary address (BD_ADDR_P) and earbud 506 may have a secondary address (BD_ADDR_S). Earbud 504 may have a primary key (IRK_P). Earbud 504, in the primary role, has ownership of the ACL channel, control information, or other non-audio data. Earbud 506, in the secondary role, is responsible for audio data only and not control information.

By a single earbud taking ownership of the ACL channel and delegating a CIS, in a split CIG configuration, the earbuds may resolve incompatibility issues between TWS and LEA. Split CIG may also enable support for relaying missing packets between the earbuds. Since the earbuds continue to appear as a single device to UE 502 when they are upgraded to support LEA, no re-pairing is necessary with UE 502.

In some aspects, if earbud 504 and earbud 506 are to swap primary and secondary roles, earbud 504 may transmit an indication to earbud 506 that the control channel is to be handed over to earbud 506. Earbud 504 may hand over the ACL channel such that earbud 506 has ownership of the ACL channel. Earbud 504 and earbud 506 may not swap CIS 1 and CIS 2, as left audio and right audio locations are to remain the same. Earbud 504 and earbud 506, as part of the swap of ACL channel ownership, may swap addresses and/or IRKs. The ACL channel may be associated with the IRK_P.

In some aspects, if earbud 506 disconnects (e.g., loses connection due to returning to an earbud case, powers off due to low battery), earbud 504 may take back ownership of a delegated CIS (CIS 2). If earbud 504 disconnects (e.g., stops maintenance of the ACL channel and CIS 1), earbud 506 may become the new primary earbud. Earbud 506 may take ownership of the ACL channel and of CIS 1. Earbud 506 may also take on the primary address and primary IRK. If earbud 506 detects that earbud 504 is back and ready to connect (e.g., detects signaling from earbud 504, receives a message from earbud 504 or UE 502), earbud 506 may delegate CIS 1 back to earbud 504. Earbud 506 may retain ownership of the ACL channel or hand the ACL channel back to earbud 504.

In some aspects, earbud 504 and earbud 506 may each adjust a transmit power such that UE 502 observes a same transmit power from each earbud. For example, earbud 506 may be further away than earbud 504 and may have a lower RSSI value than earbud 504 for its CIS connection. Accordingly, earbud 506 may increase a transmit power or coordinate with earbud 504 to lower a transmit power of earbud 504, such that UE 502 observes a same RSSI value from each earbud. Without this adjustment of transmit power, UE 502 may observe different RSSI values for the two CISs. This may cause confusion for UE 502 and how it handles a power algorithm, because as far as UE 502 is concerned, the two CISs are to the same stereo device.

Alternatively, or additionally, each earbud may manage the transmit power for each CIS separately. For example, if the RSSI value for one CIS is very low compared to the other CIS, UE 502 may request an increase in a transmit power level on that CIS. Similarly, the earbuds can also request an increase in the transmit power level on a per-CIS basis.

Earbuds 504 and 506 may be configured for adaptive frequency hopping (AFH), where an earbud may hop frequencies as needed or as part of a regular rotation. This may help to avoid problematic frequencies. Channel conditions may vary and be different between earbud 504 and earbud 506. For example, earbud 506 may be facing a direction of a Wi-Fi access point and experiencing interference. Earbud 504 may not be experiencing any interference. In some aspects, earbud 506 may provide channel qualities of one or more frequencies to earbud 504, and earbud 504 may combine such information with its own channel qualities for the frequencies and transmit an indication to UE 502 of the channel qualities of the frequencies. The information may be added together or combined in the indication. UE 502, earbud 504, and/or earbud 506 may hop frequencies or adapt frequency selection based at least in part on the indication. Alternatively, or additionally, each earbud may use an independent AFH map for each CIS. Earbud 504 may transmit two separate sets of channel classification information to UE 502. Earbud 504 may combine the two sets of channel classification information before transmission. UE 502 may use the information to select an AFH map for each CIS.

In some scenarios, earbud 504 and earbud 506, being separate devices, may operate on a different clock domain than the CISs and the control channel for the CISs. In some aspects, earbud 504 and earbud 506 may coordinate to synchronize a timing reference and/or slot boundaries for communications between each other and/or with the UE using the CISs. A BR/EDR link between earbuds 504 and 506 may be kept in a sniffing mode in order to reduce a duty cycle of communications. A sniff interval may be set to a multiple of 30 milliseconds (ms), as CIS intervals are multiples of either 7.5 ms or 10 ms. This means that the CISs can drift into sniff anchor points, which leads to a permanent clash between the two CISs. To avoid this, earbuds 504 and 506 may drag a BR/EDR link (adjust a timing of the link), such that a permanent clash of the CISs is avoided.

As indicated above, Fig. 5 is provided as an example. Other examples may differ from what is described with regard to Fig. 5.

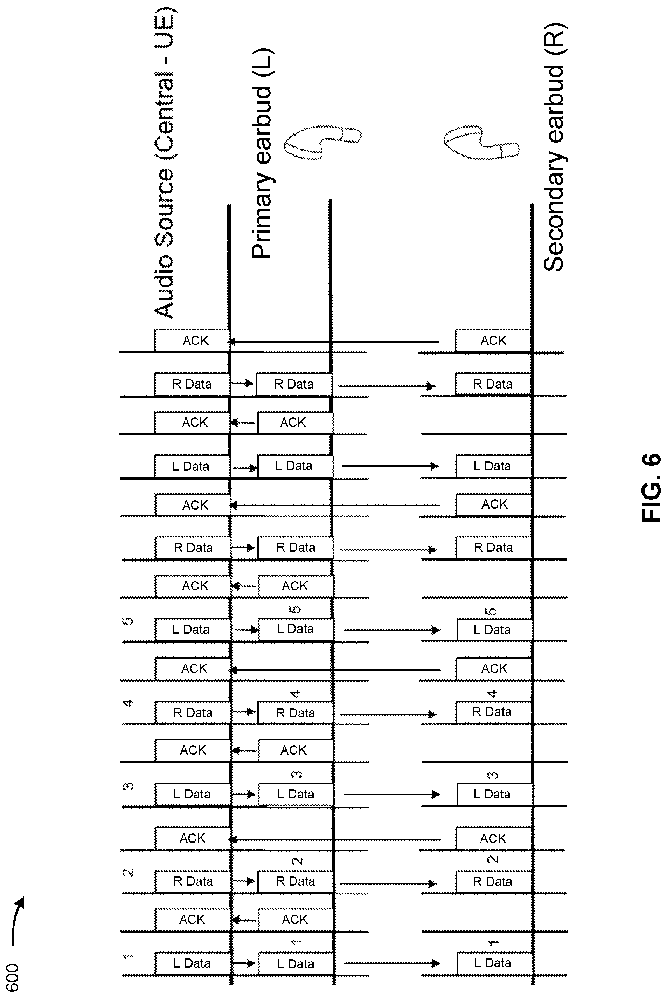

Fig. 6 is a diagram illustrating an example 600 of acknowledgement for separate packets, in accordance with the present disclosure.

The split CIG concept may be applicable to BR/EDR. In LEA, left audio and right audio is transmitted on different logical transports (e.g., CISs). However, in BR/EDR, left audio and right audio is transmitted on the same logical transport (e.g., ACL channel). Another complication is that the same ACL channel also carries non-audio and control traffic. In some aspects, a UE may use an encoder (e.g., an aptX^{™} encoder) to split left audio and right audio into separate packets before passing them onto a Bluetooth^{®} subsystem. Over the air, left audio and right audio may also be transmitted in separate packets. Each packet may contain a field that indicates whether the audio data in the packet is left audio or right audio. A primary earbud may request that a secondary earbud acknowledge, for example, right audio packets to the UE, as the primary earbud acknowledges left audio packets, non-audio packets, and control packets to the UE. This may reduce overall system latency, because the earbuds may no longer need to relay missing packets to each other. This scheme maybe referred to as "Split ACK" and is shown by example 600.

Example 600 shows how left audio data and right audio data are separately acknowledged by a left earbud operating as a primary earbud, and a right earbud operating as a secondary earbud. For example, as shown in time resource 1, a left earbud may receive a packet designated as left audio data, and the left earbud may transmit an acknowledgement (ACK) for the packet for left audio data. As shown in time resource 2, the right earbud may receive a packet designated as right audio data, and the right earbud may transmit an ACK for the packet for right audio data.

As indicated above, Fig. 6 is provided as an example. Other examples may differ from what is described with regard to Fig. 6.

Fig. 7 is a diagram illustrating an example process 700 performed, for example, by a first peripheral device, in accordance with the present disclosure. Example process 700 is an example where the first peripheral device (e.g., peripheral device 110 depicted in Figs. 1-2, earbud 304 depicted in Fig. 3, earbud 404 depicted in Fig. 4, earbud 504 depicted in Fig. 5) performs operations associated with split CIG.

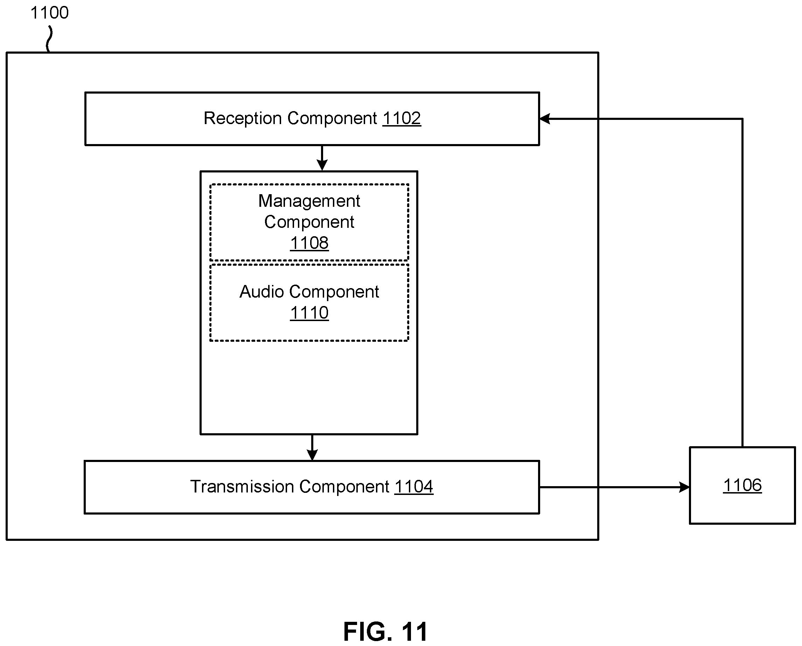

As shown in Fig. 7, in some aspects, process 700 may include establishing, with a UE, a first CIS, a second CIS, and a control channel for the first CIS and the second CIS (block 710). For example, the first peripheral device (e.g., using management component 1108 depicted in Fig. 11) may establish, with a UE, a first CIS, a second CIS, and a control channel for the first CIS and the second CIS, as described above. In some aspects, the first peripheral device is configured to output audio signals for the first CIS and handle feedback for the first CIS.

As further shown in Fig. 7, in some aspects, process 700 may include transmitting, to a second peripheral device paired with the first peripheral device, an indication that the second peripheral device is to output audio signals for the second CIS and handle feedback for the second CIS (block 720). For example, the first peripheral device (e.g., using transmission component 1104 depicted in Fig. 11) may transmit, to a second peripheral device paired with the first peripheral device, an indication that the second peripheral device is to output audio signals for the second CIS and handle feedback for the second CIS, as described above.

As further shown in Fig. 7, in some aspects, process 700 may include receiving the first CIS, while maintaining the control channel for the first CIS and the second CIS (block 730). For example, the first peripheral device (e.g., using reception component 1102 depicted in Fig. 11) may receive the first CIS, while maintaining the control channel for the first CIS and the second CIS, as described above.

Process 700 may include additional aspects, such as any single aspect or any combination of aspects described below and/or in connection with one or more other processes described elsewhere herein.

In a first aspect, process 700 includes causing the first peripheral device to output audio signals for the first CIS.

In a second aspect, alone or in combination with the first aspect, process 700 includes transmitting microphone data on the first CIS.

In a third aspect, alone or in combination with one or more of the first and second aspects, the indication indicates that the second peripheral device is to transmit microphone data received by the second peripheral device on the second CIS.

In a fourth aspect, alone or in combination with one or more of the first through third aspects, the first peripheral device operates with a primary role and the second peripheral device operates with a secondary role, and process includes swapping the primary role and the secondary role between the first peripheral device and the second peripheral device.

In a fifth aspect, alone or in combination with one or more of the first through fourth aspects, process 700 includes swapping an address of the first peripheral device and an address of the second peripheral device.

In a sixth aspect, alone or in combination with one or more of the first through fifth aspects, process 700 includes transmitting, to the second peripheral device, an indication that the control channel is to be handed over to the second peripheral device, and handing over the control channel to the second peripheral device.

In a seventh aspect, alone or in combination with one or more of the first through sixth aspects, process 700 includes receiving, from the UE, the second CIS after detecting that the second peripheral device is not receiving the second CIS, outputting audio signals for the first CIS and the second CIS, and handling feedback for the second CIS.

In an eighth aspect, alone or in combination with one or more of the first through seventh aspects, process 700 includes transmitting microphone data on the second CIS.

In a ninth aspect, alone or in combination with one or more of the first through eighth aspects, process 700 includes receiving, from the second peripheral device after stopping maintenance of the control channel and the first CIS (e.g., not receiving, no longer owns), an indication to receive the first CIS and handle feedback for the first CIS.

In a tenth aspect, alone or in combination with one or more of the first through ninth aspects, process 700 includes adjusting a transmit power (e.g., increasing, decreasing) for transmitting feedback or microphone data to the UE based at least in part on a result of comparing a signal strength of the first CIS and a signal strength of the second CIS, where the transmit power is adjusted such that the UE is to detect a same transmit power from the first peripheral device and the second peripheral device.

In an eleventh aspect, alone or in combination with one or more of the first through tenth aspects, process 700 includes adjusting a transmit power for transmitting feedback or microphone data to the UE based at least in part on receiving an indication from the UE to adjust the transmit power.

In a twelfth aspect, alone or in combination with one or more of the first through eleventh aspects, process 700 includes transmitting, to the UE, an indication of channel qualities for frequencies (e.g., RSRP, signal to noise ratio (SNR), RSRQ, RSSI, CQI) that are available for one or more of the control channel or the first CIS.

In a thirteenth aspect, alone or in combination with one or more of the first through twelfth aspects, process 700 includes receiving, from the second peripheral device, information about channel qualities of frequencies that are available for the second CIS, where the information is included in the indication that is transmitted to the UE.

In a fourteenth aspect, alone or in combination with one or more of the first through thirteenth aspects, process 700 includes synchronizing a timing reference for slot boundaries (e.g., adjusting timing forward, adjusting timing backward, increasing timing, decreasing timing) used by the first peripheral device and the second peripheral device.

In a fifteenth aspect, alone or in combination with one or more of the first through fourteenth aspects, process 700 includes adjusting a timing of a link between the first peripheral device and the second peripheral device to avoid time domain resource conflicts with the first CIS and the second CIS.

Although Fig. 7 shows example blocks of process 700, in some aspects, process 700 may include additional blocks, fewer blocks, different blocks, or differently arranged blocks than those depicted in Fig. 7. Additionally, or alternatively, two or more of the blocks of process 700 may be performed in parallel.

Fig. 8 is a diagram illustrating an example process 800 performed, for example, by a first peripheral device, in accordance with the present disclosure. The first peripheral device of Fig. 8 may be the second peripheral device described in connection with Fig. 7. Example process 800 is an example where the first peripheral device (e.g., peripheral device 110 depicted in Figs. 1-2, earbud 306 depicted in Fig. 3, earbud 406 depicted in Fig. 4, earbud 506 depicted in Fig. 5) performs operations associated with split CIG.

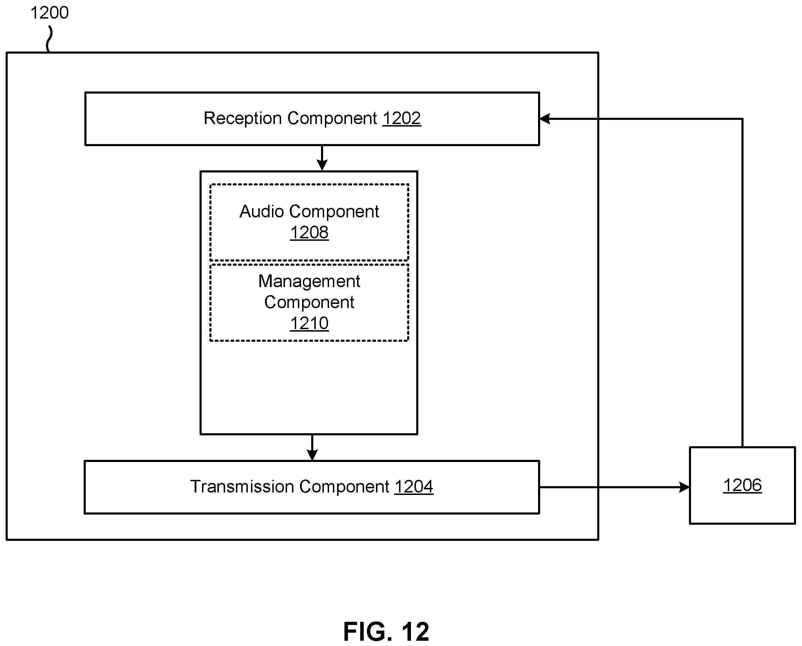

As shown in Fig. 8, in some aspects, process 800 may include receiving, from a second peripheral device paired to the first peripheral device, an indication that the first peripheral device is to output audio for a first CIS from a UE and handle feedback for the first CIS (block 810). For example, the first peripheral device (e.g., using reception component 1202 depicted in Fig. 12) may receive, from a second peripheral device paired to the first peripheral device, an indication that the first peripheral device is to output audio for a first CIS from a UE and handle feedback for the first CIS, as described above.

As further shown in Fig. 8, in some aspects, process 800 may include receiving the first CIS (block 820). For example, the first peripheral device (e.g., using reception component 1202 depicted in Fig. 12) may receive the first CIS, as described above.

As further shown in Fig. 8, in some aspects, process 800 may include outputting audio signals for the first CIS (block 830). For example, the first peripheral device (e.g., using audio component 1208 depicted in Fig. 12) may output audio signals for the first CIS, as described above.

Process 800 may include additional aspects, such as any single aspect or any combination of aspects described below and/or in connection with one or more other processes described elsewhere herein.

In a first aspect, process 800 includes handling feedback for the first CIS.

In a second aspect, alone or in combination with the first aspect, the indication indicates that the first peripheral device is to transmit microphone data received by the first peripheral device on the first CIS.

In a third aspect, alone or in combination with one or more of the first and second aspects, process 800 includes transmitting microphone data on the first CIS.

In a fourth aspect, alone or in combination with one or more of the first through third aspects, process 800 includes receiving, from the second peripheral device, an indication that a control channel for the first CIS and the second CIS is to be handed over to the first peripheral device, and maintaining the control channel for the first CIS and the second CIS.

In a fifth aspect, alone or in combination with one or more of the first through fourth aspects, process 800 includes swapping an address of the first peripheral device and an address of the second peripheral device.

In a sixth aspect, alone or in combination with one or more of the first through fifth aspects, process 800 includes establishing, with the UE, a control channel for the first CIS and the second CIS after the second peripheral device has stopped maintenance of the control channel and the second CIS from the UE, and transmitting, to the second peripheral device, an indication that the second peripheral device is to output audio signals for the second CIS and handle feedback for the second CIS, after the second peripheral device is ready to receive the second CIS.

In a seventh aspect, alone or in combination with one or more of the first through sixth aspects, process 800 includes transmitting, to the second peripheral device, an indication of channel qualities of frequencies that are available for the first CIS.

Although Fig. 8 shows example blocks of process 800, in some aspects, process 800 may include additional blocks, fewer blocks, different blocks, or differently arranged blocks than those depicted in Fig. 8. Additionally, or alternatively, two or more of the blocks of process 800 may be performed in parallel.

Fig. 9 is a diagram illustrating an example process 900 performed, for example, by a first peripheral device, in accordance with the present disclosure. Example process 900 is an example where the first peripheral device (e.g., peripheral device 110 depicted in Figs. 1-2, earbud 304 depicted in Fig. 3, earbud 404 depicted in Fig. 4, earbud 504 depicted in Fig. 5) performs operations associated with split audio acknowledgement.

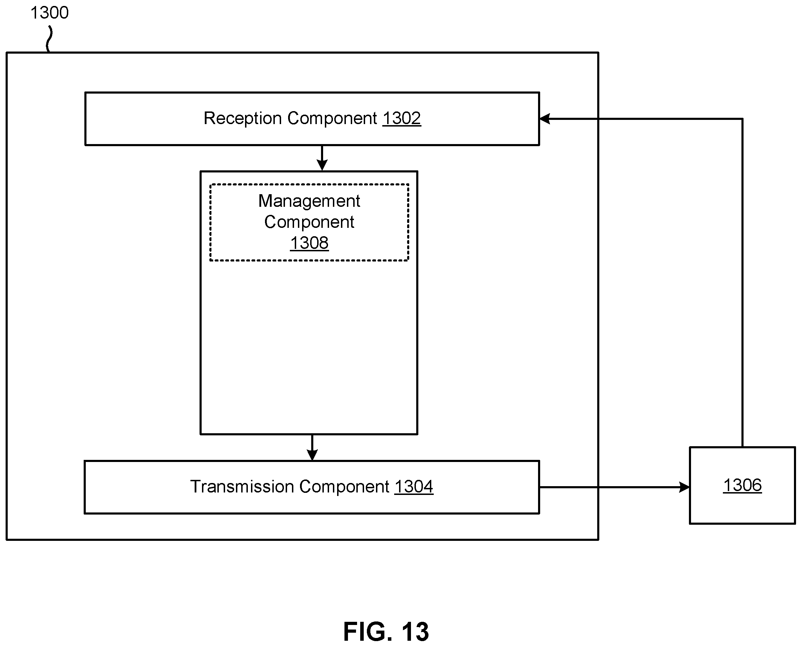

As shown in Fig. 9, in some aspects, process 900 may include establishing, with a UE, a control channel for a first audio stream and a second audio stream from the UE (block 910). For example, the first peripheral device (e.g., using management component 1308 depicted in Fig. 13) may establish, with a UE, a control channel for a first audio stream and a second audio stream from the UE, as described above. In some aspects, the first peripheral device is configured to output audio signals for the first audio stream and handle feedback for the first audio stream.

As further shown in Fig. 9, in some aspects, process 900 may include transmitting, to a second peripheral device paired with the first peripheral device, an indication that the second peripheral device is to output audio signals for the second audio stream and handle feedback for audio packets designated for the second audio stream (block 920). For example, the first peripheral device (e.g., using transmission component 1304 depicted in Fig. 13) may transmit, to a second peripheral device paired with the first peripheral device, an indication that the second peripheral device is to output audio signals for the second audio stream and handle feedback for audio packets designated for the second audio stream, as described above.

As further shown in Fig. 9, in some aspects, process 900 may include receiving audio packets designated for the first audio stream (block 930). For example, the first peripheral device (e.g., using reception component 1302 depicted in Fig. 13) may receive audio packets designated for the first audio stream, as described above.

As further shown in Fig. 9, in some aspects, process 900 may include transmitting feedback for non-audio packets and for one or more of the audio packets designated for the first audio stream (block 940). For example, the first peripheral device (e.g., using transmission component 1304 depicted in Fig. 13) may transmit feedback for non-audio packets and for one or more of the audio packets designated for the first audio stream, as described above.

Process 900 may include additional aspects, such as any single aspect or any combination of aspects described below and/or in connection with one or more other processes described elsewhere herein.

Although Fig. 9 shows example blocks of process 900, in some aspects, process 900 may include additional blocks, fewer blocks, different blocks, or differently arranged blocks than those depicted in Fig. 9. Additionally, or alternatively, two or more of the blocks of process 900 may be performed in parallel.

Fig. 10 is a diagram illustrating an example process 1000 performed, for example, by a first peripheral device, in accordance with the present disclosure. Example process 1000 is an example where the first peripheral device (e.g., peripheral device 110 depicted in Figs. 1-2, earbud 306 depicted in Fig. 3, earbud 406 depicted in Fig. 4, earbud 506 depicted in Fig. 5) performs operations associated with split audio acknowledgement.

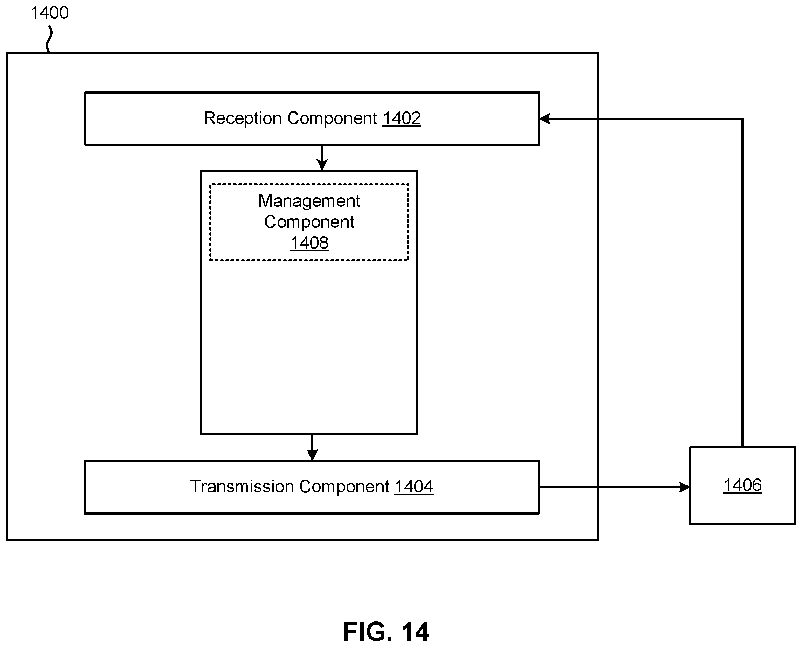

As shown in Fig. 10, in some aspects, process 1000 may include receiving, from a second peripheral device paired to the first peripheral device, an indication that the first peripheral device is to output audio signals for a first audio stream and handle feedback for audio packets designated for the first audio stream (block 1010). For example, the first peripheral device (e.g., using reception component 1402 depicted in Fig. 14) may receive, from a second peripheral device paired to the first peripheral device, an indication that the first peripheral device is to output audio signals for a first audio stream and handle feedback for audio packets designated for the first audio stream, as described above.

As further shown in Fig. 10, in some aspects, process 1000 may include receiving the first audio stream (block 1020). For example, the first peripheral device (e.g., using reception component 1402 depicted in Fig. 14) may receive the first audio stream, as described above.

As further shown in Fig. 10, in some aspects, process 1000 may include transmitting feedback for audio packets designated for the first audio stream (block 1030). For example, the first peripheral device (e.g., using transmission component 1404 depicted in Fig. 14) may transmit feedback for audio packets designated for the first audio stream, as described above.

Process 1000 may include additional aspects, such as any single aspect or any combination of aspects described below and/or in connection with one or more other processes described elsewhere herein.

Although Fig. 10 shows example blocks of process 1000, in some aspects, process 1000 may include additional blocks, fewer blocks, different blocks, or differently arranged blocks than those depicted in Fig. 10. Additionally, or alternatively, two or more of the blocks of process 1000 may be performed in parallel.

Fig. 11 is a block diagram of an example apparatus 1100 for wireless communication. The apparatus 1100 may be a peripheral device, or a peripheral device may include the apparatus 1100. In some aspects, the apparatus 1100 includes a reception component 1102 and a transmission component 1104, which may be in communication with one another (for example, via one or more buses and/or one or more other components). As shown, the apparatus 1100 may communicate with another apparatus 1106 (such as a UE, a base station, another peripheral device, or another wireless communication device) using the reception component 1102 and the transmission component 1104. As further shown, the apparatus 1100 may include a management component 1108 and/or an audio component 1110, among other examples.

In some aspects, the apparatus 1100 may be configured to perform one or more operations described herein in connection with Figs. 1-6. Additionally, or alternatively, the apparatus 1100 may be configured to perform one or more processes described herein, such as process 700 of Fig. 7. In some aspects, the apparatus 1100 and/or one or more components shown in Fig. 11 may include one or more components of the peripheral device described above in connection with Fig. 2. Additionally, or alternatively, one or more components shown in Fig. 11 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1102 may receive communications, such as reference signals, control information, data communications, or a combination thereof, from the apparatus 1106. The reception component 1102 may provide received communications to one or more other components of the apparatus 1100. In some aspects, the reception component 1102 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1106. In some aspects, the reception component 1102 may include one or more antennas, a demodulator, a multiple input multiple output (MIMO) detector, a receive processor, a controller/processor, a memory, or a combination thereof, of the peripheral device described above in connection with Fig. 2.

The transmission component 1104 may transmit communications, such as reference signals, control information, data communications, or a combination thereof, to the apparatus 1106. In some aspects, one or more other components of the apparatus 1106 may generate communications and may provide the generated communications to the transmission component 1104 for transmission to the apparatus 1106. In some aspects, the transmission component 1104 may perform signal processing on the generated communications (such as filtering, amplification, modulation, digital-to-analog conversion, multiplexing, interleaving, mapping, or encoding, among other examples), and may transmit the processed signals to the apparatus 1106. In some aspects, the transmission component 1104 may include one or more antennas, a modulator, a transmit MIMO processor, a transmit processor, a controller/processor, a memory, or a combination thereof, of the peripheral device described above in connection with Fig. 2. In some aspects, the transmission component 1104 may be co-located with the reception component 1102 in a transceiver.

The management component 1108 may establish, with a UE, a first CIS, a second CIS, and a control channel for the first CIS and the second CIS, where the first peripheral device is configured to output audio signals for the first CIS and handle feedback for the first CIS. The transmission component 1104 may transmit, to a second peripheral device paired with the first peripheral device, an indication that the second peripheral device is to output audio signals for the second CIS and handle feedback for the second CIS. The reception component 1102 may receive the first CIS, while maintaining the control channel for the first CIS and the second CIS.

The audio component 1110 may cause the first peripheral device to output audio signals for the first CIS. The audio component 1110 may include signal processing components and apparatus 1100 may include signal processing, speaker and microphone components. The transmission component 1104 may transmit microphone data on the first CIS. The management component 1108 may swap an address of the first peripheral device and an address of the second peripheral device.

The transmission component 1104 may transmit, to the second peripheral device, an indication that the control channel is to be handed over to the second peripheral device. The management component 1108 may hand over the control channel to the second peripheral device.

The reception component 1102 may receive, from the UE, the second CIS after detecting that the second peripheral device is not receiving the second CIS.

The audio component 1110 may output audio signals for the first CIS and the second CIS. The management component 1108 may handle feedback for the second CIS.

The transmission component 1104 may transmit microphone data on the second CIS. The reception component 1102 may receive, from the second peripheral device after stopping maintenance of the control channel and the first CIS, an indication to receive the first CIS and handle feedback for the first CIS.

The management component 1108 may adjust a transmit power for transmitting feedback or microphone data to the UE based at least in part on a result of comparing a signal strength of the first CIS and a signal strength of the second CIS, where the transmit power is adjusted such that the UE is to detect a same transmit power from the first peripheral device and the second peripheral device. The management component 1108 may adjust a transmit power for transmitting feedback or microphone data to the UE based at least in part on receiving an indication from the UE to adjust the transmit power.

The transmission component 1104 may transmit, to the UE, an indication of channel qualities for frequencies that are available for one or more of the control channel or the first CIS. The reception component 1102 may receive, from the second peripheral device, information about channel qualities of frequencies that are available for the second CIS, where the information is included in the indication that is transmitted to the UE.

The management component 1108 may synchronize a timing reference for slot boundaries used by the first peripheral device and the second peripheral device. The management component 1108 may adjust a timing of a link between the first peripheral device and the second peripheral device to avoid time domain resource conflicts with the first CIS and the second CIS.

The number and arrangement of components shown in Fig. 11 are provided as an example. In practice, there may be additional components, fewer components, different components, or differently arranged components than those shown in Fig. 11. Furthermore, two or more components shown in Fig. 11 may be implemented within a single component, or a single component shown in Fig. 11 may be implemented as multiple, distributed components. Additionally, or alternatively, a set of (one or more) components shown in Fig. 11 may perform one or more functions described as being performed by another set of components shown in Fig. 11.

Fig. 12 is a block diagram of an example apparatus 1200 for wireless communication. The apparatus 1200 may be a peripheral device, or a peripheral device may include the apparatus 1200. In some aspects, the apparatus 1200 includes a reception component 1202 and a transmission component 1204, which may be in communication with one another (for example, via one or more buses and/or one or more other components). As shown, the apparatus 1200 may communicate with another apparatus 1206 (such as a UE, a base station, another peripheral device, or another wireless communication device) using the reception component 1202 and the transmission component 1204. As further shown, the apparatus 1200 may include an audio component 1208 and/or a management component 1210, among other examples.

In some aspects, the apparatus 1200 may be configured to perform one or more operations described herein in connection with Figs. 1-6. Additionally, or alternatively, the apparatus 1200 may be configured to perform one or more processes described herein, such as process 800 of Fig. 8. In some aspects, the apparatus 1200 and/or one or more components shown in Fig. 12 may include one or more components of the peripheral device described above in connection with Fig. 2. Additionally, or alternatively, one or more components shown in Fig. 12 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1202 may receive communications, such as reference signals, control information, data communications, or a combination thereof, from the apparatus 1206. The reception component 1202 may provide received communications to one or more other components of the apparatus 1200. In some aspects, the reception component 1202 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1206. In some aspects, the reception component 1202 may include one or more antennas, a demodulator, a MIMO detector, a receive processor, a controller/processor, a memory, or a combination thereof, of the peripheral device described above in connection with Fig. 2.

The transmission component 1204 may transmit communications, such as reference signals, control information, data communications, or a combination thereof, to the apparatus 1206. In some aspects, one or more other components of the apparatus 1206 may generate communications and may provide the generated communications to the transmission component 1204 for transmission to the apparatus 1206. In some aspects, the transmission component 1204 may perform signal processing on the generated communications (such as filtering, amplification, modulation, digital-to-analog conversion, multiplexing, interleaving, mapping, or encoding, among other examples), and may transmit the processed signals to the apparatus 1206. In some aspects, the transmission component 1204 may include one or more antennas, a modulator, a transmit MIMO processor, a transmit processor, a controller/processor, a memory, or a combination thereof, of the peripheral device described above in connection with Fig. 2. In some aspects, the transmission component 1204 may be co-located with the reception component 1202 in a transceiver.

The reception component 1202 may receive, from a second peripheral device paired to the first peripheral device, an indication that the first peripheral device is to output audio for a first CIS from a UE and handle feedback for the first CIS. The reception component 1202 may receive the first CIS. The audio component 1208 may output audio signals for the first CIS. The audio component 1208 may include signal processing components and apparatus 1200 may include speaker and microphone components. The management component 1210 may handle feedback for the first CIS. The transmission component 1204 may transmit microphone data on the first CIS.

The reception component 1202 may receive, from the second peripheral device, an indication that a control channel for the first CIS and the second CIS is to be handed over to the first peripheral device. The management component 1210 may maintain the control channel for the first CIS and the second CIS. The management component 1210 may swap an address of the first peripheral device and an address of the second peripheral device. The management component 1210 may establish, with the UE, a control channel for the first CIS and the second CIS after the second peripheral device has stopped maintenance of the control channel and the second CIS from the UE.

The transmission component 1204 may transmit, to the second peripheral device, an indication that the second peripheral device is to output audio signals for the second CIS and handle feedback for the second CIS, after the second peripheral device is ready to receive the second CIS. The transmission component 1204 may transmit, to the second peripheral device, an indication of channel qualities of frequencies that are available for the first CIS.

The number and arrangement of components shown in Fig. 12 are provided as an example. In practice, there may be additional components, fewer components, different components, or differently arranged components than those shown in Fig. 12. Furthermore, two or more components shown in Fig. 12 may be implemented within a single component, or a single component shown in Fig. 12 may be implemented as multiple, distributed components. Additionally, or alternatively, a set of (one or more) components shown in Fig. 12 may perform one or more functions described as being performed by another set of components shown in Fig. 12.

Fig. 13 is a block diagram of an example apparatus 1300 for wireless communication. The apparatus 1300 may be a peripheral device, or a peripheral device may include the apparatus 1300. In some aspects, the apparatus 1300 includes a reception component 1302 and a transmission component 1304, which may be in communication with one another (for example, via one or more buses and/or one or more other components). As shown, the apparatus 1300 may communicate with another apparatus 1306 (such as a UE, a base station, another peripheral device, or another wireless communication device) using the reception component 1302 and the transmission component 1304. As further shown, the apparatus 1300 may include a management component 1308, among other examples.

In some aspects, the apparatus 1300 may be configured to perform one or more operations described herein in connection with Figs. 1-6. Additionally, or alternatively, the apparatus 1300 may be configured to perform one or more processes described herein, such as process 900 of Fig. 9. In some aspects, the apparatus 1300 and/or one or more components shown in Fig. 13 may include one or more components of the peripheral device described above in connection with Fig. 2. Additionally, or alternatively, one or more components shown in Fig. 13 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1302 may receive communications, such as reference signals, control information, data communications, or a combination thereof, from the apparatus 1306. The reception component 1302 may provide received communications to one or more other components of the apparatus 1300. In some aspects, the reception component 1302 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1306. In some aspects, the reception component 1302 may include one or more antennas, a demodulator, a MIMO detector, a receive processor, a controller/processor, a memory, or a combination thereof, of the peripheral device described above in connection with Fig. 2.

The transmission component 1304 may transmit communications, such as reference signals, control information, data communications, or a combination thereof, to the apparatus 1306. In some aspects, one or more other components of the apparatus 1306 may generate communications and may provide the generated communications to the transmission component 1304 for transmission to the apparatus 1306. In some aspects, the transmission component 1304 may perform signal processing on the generated communications (such as filtering, amplification, modulation, digital-to-analog conversion, multiplexing, interleaving, mapping, or encoding, among other examples), and may transmit the processed signals to the apparatus 1306. In some aspects, the transmission component 1304 may include one or more antennas, a modulator, a transmit MIMO processor, a transmit processor, a controller/processor, a memory, or a combination thereof, of the peripheral device described above in connection with Fig. 2. In some aspects, the transmission component 1304 may be co-located with the reception component 1302 in a transceiver.

The management component 1308 may establish, with UE, a control channel for a first audio stream and a second audio stream from the UE, wherein the first peripheral device is configured to output audio signals for the first audio stream and handle feedback for the first audio stream. The transmission component 1304 may transmit, to a second peripheral device paired with the first peripheral device, an indication that the second peripheral device is to output audio signals for the second audio stream and handle feedback for audio packets designated for the second audio stream. The reception component 1302 may receive audio packets designated for the first audio stream. The transmission component 1304 may transmit feedback for non-audio packets and for one or more of the audio packets designated for the first audio stream.

The number and arrangement of components shown in Fig. 13 are provided as an example. In practice, there may be additional components, fewer components, different components, or differently arranged components than those shown in Fig. 13. Furthermore, two or more components shown in Fig. 13 may be implemented within a single component, or a single component shown in Fig. 13 may be implemented as multiple, distributed components. Additionally, or alternatively, a set of (one or more) components shown in Fig. 13 may perform one or more functions described as being performed by another set of components shown in Fig. 13.

Fig. 14 is a block diagram of an example apparatus 1400 for wireless communication. The apparatus 1400 may be a peripheral device, or a peripheral device may include the apparatus 1400. In some aspects, the apparatus 1400 includes a reception component 1402 and a transmission component 1404, which may be in communication with one another (for example, via one or more buses and/or one or more other components). As shown, the apparatus 1400 may communicate with another apparatus 1406 (such as a UE, a base station, another peripheral device, or another wireless communication device) using the reception component 1402 and the transmission component 1404. As further shown, the apparatus 1400 may include a management component 1408, among other examples.

In some aspects, the apparatus 1400 may be configured to perform one or more operations described herein in connection with Figs. 1-6. Additionally, or alternatively, the apparatus 1400 may be configured to perform one or more processes described herein, such as process 1000 of Fig. 10. In some aspects, the apparatus 1400 and/or one or more components shown in Fig. 14 may include one or more components of the peripheral device described above in connection with Fig. 2. Additionally, or alternatively, one or more components shown in Fig. 14 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1402 may receive communications, such as reference signals, control information, data communications, or a combination thereof, from the apparatus 1406. The reception component 1402 may provide received communications to one or more other components of the apparatus 1400. In some aspects, the reception component 1402 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1406. In some aspects, the reception component 1402 may include one or more antennas, a demodulator, a MIMO detector, a receive processor, a controller/processor, a memory, or a combination thereof, of the peripheral device described above in connection with Fig. 2.

The transmission component 1404 may transmit communications, such as reference signals, control information, data communications, or a combination thereof, to the apparatus 1406. In some aspects, one or more other components of the apparatus 1406 may generate communications and may provide the generated communications to the transmission component 1404 for transmission to the apparatus 1406. In some aspects, the transmission component 1404 may perform signal processing on the generated communications (such as filtering, amplification, modulation, digital-to-analog conversion, multiplexing, interleaving, mapping, or encoding, among other examples), and may transmit the processed signals to the apparatus 1406. In some aspects, the transmission component 1404 may include one or more antennas, a modulator, a transmit MIMO processor, a transmit processor, a controller/processor, a memory, or a combination thereof, of the peripheral device described above in connection with Fig. 2. In some aspects, the transmission component 1404 may be co-located with the reception component 1402 in a transceiver.

The reception component 1402 may receive, from a second peripheral device paired to the first peripheral device, an indication that the first peripheral device is to output audio signals for a first audio stream and handle feedback for audio packets designated for the first audio stream. The reception component 1402 may receive the first audio stream. The management component 1408 may manage the first audio stream. The transmission component 1404 may transmit feedback for audio packets designated for the first audio stream.

The number and arrangement of components shown in Fig. 14 are provided as an example. In practice, there may be additional components, fewer components, different components, or differently arranged components than those shown in Fig. 14. Furthermore, two or more components shown in Fig. 14 may be implemented within a single component, or a single component shown in Fig. 14 may be implemented as multiple, distributed components. Additionally, or alternatively, a set of (one or more) components shown in Fig. 14 may perform one or more functions described as being performed by another set of components shown in Fig. 14.

The foregoing disclosure provides illustration and description, but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware, firmware, and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a processor is implemented in hardware, firmware, and/or a combination of hardware and software.

It will be apparent that systems and/or methods described herein may be implemented in different forms of hardware, and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items (e.g., related items, unrelated items, a combination of related and unrelated items), and may be used interchangeably with "one or more." Where only one item is intended, the phrase "only one" or similar language is used. Also, as used herein, the terms "has," "have," "having," and/or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method (700) of wireless communication performed by a first peripheral device (110, 304, 404, 504), comprising:
establishing (710), with a user equipment, UE, a first connected isochronous stream, CIS, a second CIS, and a control channel for the first CIS and the second CIS, wherein the first peripheral device is configured to output audio signals for the first CIS and handle feedback for the first CIS;
transmitting (720), to a second peripheral device paired with the first peripheral device, an indication that the second peripheral device is to output audio signals for the second CIS and handle feedback for the second CIS; and
receiving (730) the first CIS, while maintaining the control channel for the first CIS and the second CIS;
the method further **characterized by** comprising:
receiving, from the UE, the second CIS after detecting that the second peripheral device is not receiving the second CIS;
outputting audio signals for the first CIS and the second CIS; and
handling feedback for the second CIS.

2. The method of claim 1, further comprising causing the first peripheral device to output audio signals for the first CIS; or
the method of claim 1, further comprising transmitting microphone data on the first CIS; or
the method of claim 1, wherein the indication indicates that the second peripheral device is to transmit microphone data received by the second peripheral device on the second CIS.

3. The method of claim 1, wherein the first peripheral device operates with a primary role and the second peripheral device operates with a secondary role, and wherein the method further comprises swapping the primary role and the secondary role between the first peripheral device and the second peripheral device.; and
preferably, further comprising swapping an address of the first peripheral device and an address of the second peripheral device.

4. The method of claim 1, further comprising:
transmitting microphone data on the second CIS.

5. The method of claim 1, further comprising adjusting a transmit power for transmitting feedback or microphone data to the UE based at least in part on a result of comparing a signal strength of the first CIS and a signal strength of the second CIS, wherein the transmit power is adjusted such that the UE is to detect a same transmit power from the first peripheral device and the second peripheral device; or
adjusting a transmit power for transmitting feedback or microphone data to the UE based at least in part on receiving an indication from the UE to adjust the transmit power.

6. The method of claim 1, further comprising transmitting, to the UE, an indication of channel qualities for frequencies that are available for one or more of the control channel or the first CIS; and
preferably, further comprising receiving, from the second peripheral device, information about channel qualities of frequencies that are available for the second CIS, wherein the information is included in the indication that is transmitted to the UE.

7. The method of claim 1, further comprising synchronizing a timing reference for slot boundaries used by the first peripheral device and the second peripheral device; or
the method of claim 1, further comprising adjusting a timing of a link between the first peripheral device and the second peripheral device to avoid time domain resource conflicts with the first CIS and the second CIS.

8. A system of wireless communication, comprising:
a second peripheral device (110, 306, 406, 506) configured to perform a method (800) of wireless communication, the method comprising:
receiving (810), from a first peripheral device (110, 304, 404, 504) paired to the second peripheral device, an indication that the second peripheral device is to output audio for a second connected isochronous stream, CIS, from a user equipment, UE, and handle feedback for the second CIS;
receiving (820) the second CIS; and
outputting (830) audio signals for the second CIS; and
the first peripheral device (110, 304, 404, 504) configured to perform the method of any one of claims 1-7.

9. The system of claim 8, wherein the method performed by the second peripheral device further comprises:
handling feedback for the second CIS; or
wherein the indication indicates that the second peripheral device is to transmit microphone data received by the second peripheral device on the second CIS; or
transmitting microphone data on the second CIS.

10. The system of claim 8, wherein the method performed by the second peripheral device further comprises: transmitting, to the first peripheral device, an indication of channel qualities of frequencies that are available for the second CIS.

11. An apparatus for wireless communication, comprising at least one means for performing the method of any one of the claims 1-7.

12. A computer program comprising instructions which when executed by a computer cause the computer to perform the method of any one of the claims 1-7.

## Patentansprüche

1. Verfahren (700) zur drahtlosen Kommunikation, das von einer ersten peripheren Vorrichtung (110, 304, 404, 504) durchgeführt wird, umfassend:
Einrichten (710), mit einem Benutzergerät, UE, eines ersten verbundenen isochronen Stroms, CIS, eines zweiten CIS und eines Steuerkanals für den ersten CIS und den zweiten CIS, wobei die erste periphere Vorrichtung konfiguriert ist, um Audiosignale für den ersten CIS auszugeben und Feedback für den ersten CIS zu handhaben;
Übertragen (720), an eine zweite periphere Vorrichtung, die mit der ersten peripheren Vorrichtung gepaart ist, einer Anzeige, dass die zweite periphere Vorrichtung Audiosignale für den zweiten CIS ausgeben und Feedback für den zweiten CIS handhaben soll; und
Empfangen (730) des ersten CIS, während der Steuerkanal für den ersten CIS und den zweiten CIS aufrechterhalten wird;
wobei das Verfahren ferner **dadurch gekennzeichnet ist, dass** es umfasst:
Empfangen, von dem UE, des zweiten CIS nach dem Detektieren, dass die zweite periphere Vorrichtung den zweiten CIS nicht empfängt;
Ausgeben von Audiosignalen für den ersten CIS und den zweiten CIS; und
Handhaben von Feedback für den zweiten CIS.

2. Verfahren nach Anspruch 1, ferner umfassend das Veranlassen der ersten peripheren Vorrichtung, Audiosignale für den ersten CIS auszugeben; oder
Verfahren nach Anspruch 1, ferner umfassend das Übertragen von Mikrofondaten auf dem ersten CIS; oder
Verfahren nach Anspruch 1, wobei die Anzeige anzeigt, dass die zweite periphere Vorrichtung Mikrofondaten, die von der zweiten peripheren Vorrichtung empfangen werden, auf dem zweiten CIS übertragen soll.

3. Verfahren nach Anspruch 1, wobei die erste periphere Vorrichtung mit einer primären Rolle arbeitet und die zweite periphere Vorrichtung mit einer sekundären Rolle arbeitet, und wobei das Verfahren ferner das Austauschen der primären Rolle und der sekundären Rolle zwischen der ersten peripheren Vorrichtung und der zweiten peripheren Vorrichtung umfasst; und
vorzugsweise ferner umfassend das Austauschen einer Adresse der ersten peripheren Vorrichtung und einer Adresse der zweiten peripheren Vorrichtung.

4. Verfahren nach Anspruch 1, ferner umfassend:
Übertragen von Mikrofondaten auf dem zweiten CIS.

5. Verfahren nach Anspruch 1, ferner umfassend das Einstellen einer Übertragungsleistung zum Übertragen von Feedback oder Mikrofondaten an das UE basierend zumindest teilweise auf einem Ergebnis des Vergleichens einer Signalstärke des ersten CIS und einer Signalstärke des zweiten CIS, wobei die Übertragungsleistung so eingestellt wird, dass das UE eine gleiche Übertragungsleistung von der ersten peripheren Vorrichtung und der zweiten peripheren Vorrichtung detektieren soll; oder
Einstellen einer Übertragungsleistung zum Übertragen von Feedback oder Mikrofondaten an das UE basierend zumindest teilweise auf dem Empfangen einer Anzeige von dem UE, um die Übertragungsleistung anzupassen.

6. Verfahren nach Anspruch 1, ferner umfassend das Übertragen, an das UE, einer Anzeige von Kanalqualitäten für Frequenzen, die für einen oder mehrere des Steuerkanals oder des ersten CIS verfügbar sind; und
vorzugsweise ferner umfassend Empfangen, von der zweiten peripheren Vorrichtung, von Information über Kanalqualitäten von Frequenzen, die für den zweiten CIS verfügbar sind, wobei die Information in der Anzeige enthalten ist, die an das UE übertragen wird.

7. Verfahren nach Anspruch 1, ferner umfassend das Synchronisieren einer Zeitreferenz für Schlitzgrenzen, die von der ersten peripheren Vorrichtung und der zweiten peripheren Vorrichtung verwendet werden; oder
Verfahren nach Anspruch 1, ferner umfassend Anpassen einer Zeitsteuerung einer Verbindung zwischen der ersten peripheren Vorrichtung und der zweiten peripheren Vorrichtung, um Zeitdomänenressourcenkonflikte mit dem ersten CIS und dem zweiten CIS zu vermeiden.

8. System zur drahtlosen Kommunikation, umfassend:
eine zweite periphere Vorrichtung (110, 306, 406, 506), die konfiguriert ist, ein Verfahren (800) zur drahtlosen Kommunikation durchzuführen, wobei das Verfahren umfasst:
Empfangen (810), von einer ersten peripheren Vorrichtung (110, 304, 404, 504), die mit der zweiten peripheren Vorrichtung gepaart ist, einer Anzeige, dass die zweite periphere Vorrichtung Audio für einen zweiten verbundenen isochronen Strom, CIS, von einem Benutzergerät, UE, ausgeben und Feedback für den zweiten CIS handhaben soll;
Empfangen (820) des zweiten CIS; und
Ausgeben (830) von Audiosignalen für den zweiten CIS; und
wobei die erste periphere Vorrichtung (110, 304, 404, 504) konfiguriert ist, das Verfahren nach einem der Ansprüche 1-7 durchzuführen.

9. System nach Anspruch 8, wobei das von der zweiten peripheren Vorrichtung durchgeführte Verfahren ferner umfasst:
Handhaben von Feedback für den zweiten CIS; oder
wobei die Anzeige anzeigt, dass die zweite periphere Vorrichtung Mikrofondaten, die von der zweiten peripheren Vorrichtung empfangen werden, auf dem zweiten CIS übertragen soll; oder
Übertragen von Mikrofondaten auf dem zweiten CIS.

10. System nach Anspruch 8, wobei das von der zweiten peripheren Vorrichtung durchgeführte Verfahren ferner umfasst: Übertragen, an die erste periphere Vorrichtung, einer Anzeige von Kanalqualitäten von Frequenzen, die für den zweiten CIS verfügbar sind.

11. Vorrichtung zur drahtlosen Kommunikation, umfassend mindestens ein Mittel zum Durchführen des Verfahrens nach einem der Ansprüche 1-7.

12. Computerprogramm, umfassend Anweisungen, die, wenn sie von einem Computer ausgeführt werden, den Computer veranlassen, das Verfahren nach einem der Ansprüche 1-7 durchzuführen.

## Revendications

1. Un procédé (700) de communication sans fil réalisé par un premier dispositif périphérique (110, 304, 404, 504), comprenant :
l'établissement (710), avec un équipement utilisateur, UE, d'un premier flux isochrone connecté, CIS, d'un second CIS, et d'un canal de contrôle pour le premier CIS et le second CIS, dans lequel le premier dispositif périphérique est configuré pour émettre des signaux audio pour le premier CIS et gérer un retour pour le premier CIS ;
la transmission (720), à un second dispositif périphérique apparié au premier dispositif périphérique, d'une indication que le second dispositif périphérique doit émettre des signaux audio pour le second CIS et gérer un retour pour le second CIS ; et
la réception (730) du premier CIS, tout en maintenant le canal de contrôle pour le premier CIS et le second CIS ;
le procédé étant **caractérisé en outre en ce qu'**il comprend :
la réception, à partir de l'UE, du second CIS après avoir détecté que le second dispositif périphérique ne reçoit pas le second CIS ;
l'émission de signaux audio pour le premier CIS et le second CIS ; et
la gestion d'un retour pour le second CIS.

2. Le procédé selon la revendication 1, comprenant en outre l'entrainement du premier dispositif périphérique à émettre des signaux audio pour le premier CIS ; ou
le procédé selon la revendication 1, comprenant en outre la transmission de données de microphone sur le premier CIS ; ou
le procédé selon la revendication 1, dans lequel l'indication indique que le second dispositif périphérique doit transmettre des données de microphone reçues par le second dispositif périphérique sur le second CIS.

3. Le procédé selon la revendication 1, dans lequel le premier dispositif périphérique fonctionne avec un rôle primaire et le second dispositif périphérique fonctionne avec un rôle secondaire, et dans lequel le procédé comprend en outre la permutation du rôle primaire et du rôle secondaire entre le premier dispositif périphérique et le second dispositif périphérique ; et
de préférence comprenant en outre la permutation d'une adresse du premier dispositif périphérique et d'une adresse du second dispositif périphérique.

4. Le procédé selon la revendication 1, comprenant en outre :
la transmission de données de microphone sur le second CIS.

5. Le procédé selon la revendication 1, comprenant en outre l'ajustement d'une puissance d'émission pour transmettre un retour ou des données de microphone à l'UE sur la base au moins en partie d'un résultat de la comparaison d'une intensité de signal du premier CIS et d'une intensité de signal du second CIS, dans lequel la puissance d'émission est ajustée de sorte que l'UE doive détecter une même puissance d'émission à partir du premier dispositif périphérique et du second dispositif périphérique ; ou
l'ajustement d'une puissance d'émission pour transmettre un retour ou des données de microphone à l'UE sur la base au moins en partie de la réception d'une indication de l'UE pour ajuster la puissance d'émission.

6. Le procédé selon la revendication 1, comprenant en outre la transmission, à l'UE, d'une indication de qualités de canal pour des fréquences qui sont disponibles pour un ou plusieurs parmi le canal de contrôle ou le premier CIS ; et
de préférence comprenant en outre la réception, à partir du second dispositif périphérique, d'informations sur des qualités de canal de fréquences qui sont disponibles pour le second CIS, dans lequel les informations sont incluses dans l'indication qui est transmise à l'UE.

7. Le procédé selon la revendication 1, comprenant en outre la synchronisation d'une référence de séquencement pour des limites de slot utilisées par le premier dispositif périphérique et le second dispositif périphérique ; ou
le procédé selon la revendication 1, comprenant en outre l'ajustement d'un séquencement d'une liaison entre le premier dispositif périphérique et le second dispositif périphérique pour éviter des conflits de ressources de domaine temporel avec le premier CIS et le second CIS.

8. Un système de communication sans fil comprenant :
un second dispositif périphérique (110, 306, 406, 506) configuré pour réaliser un procédé (800) de communication sans fil, le procédé comprenant :
la réception (810), à partir d'un premier dispositif périphérique (110, 304, 404, 504) apparié au second dispositif périphérique, d'une indication que le second dispositif périphérique doit émettre un audio pour un second flux isochrone connecté, CIS, à partir d'un équipement utilisateur, UE, et gérer un retour pour le second CIS ;
la réception (820) du second CIS ; et
l'émission (830) de signaux audio pour le second CIS ; et
le premier dispositif périphérique (110, 304, 404, 504) configuré pour réaliser le procédé selon l'une des revendications 1 à 7.

9. Le système selon la revendication 8, dans lequel le procédé réalisé par le second dispositif périphérique comprend en outre :
la gestion d'un retour pour le second CIS ; ou
dans lequel l'indication indique que le second dispositif périphérique est destiné à transmettre des données de microphone reçues par le second dispositif périphérique sur le second CIS ; ou
la transmission de données de microphone sur le second CIS.

10. Le système selon la revendication 8, dans lequel le procédé réalisé par le second dispositif périphérique comprend en outre : la transmission, au premier dispositif périphérique, d'une indication de qualités de canal de fréquences qui sont disponibles pour le second CIS.

11. Un appareil pour la communication sans fil, comprenant au moins un moyen pour réaliser le procédé selon l'une des revendications 1 à 7.

12. Un programme de calculateur comprenant des instructions qui, lorsqu'elles sont exécutées par un calculateur, amènent le calculateur à réaliser le procédé selon l'une des revendications 1 à 7.
